# EUROPEAN PATENT SPECIFICATION

(11) **EP 3 554 229 B1**
(45) Date of publication and mention of the grant of the patent: **10.04.2024**
(21) Application number: 17882441.3
(22) Date of filing: 19.12.2017
(51) Int. Cl.: A01K 61/13, A01D 7/00, A01K 61/95, A01K 61/60

(54) **DEVICE AND METHOD FOR REMOVING LICE OF FISH**
VORRICHTUNG UND VERFAHREN ZUR ENTFERNUNG VON LÄUSEN VON FISCHEN
DISPOSITIF ET PROCÉDÉ POUR ÉLIMINER LES POUX DE POISSON

(30) Priority: 19.12.2016 NO 20162016
(43) Date of publication of application: 23.10.2019
(73) Proprietor: SALMON SOLUTIONS AS, 4058 Tananger (NO)
(72) Inventor:
(74) Representative: Acapo AS
(86) International application number: PCT/NO2017/050333
(87) International publication number: WO 2018/117856

(56) References cited:
- EP-A1- 2 837 284
- WO-A1-2016/189146
- CN-A- 101 496 503
- JP-A- 2001 045 905
- JP-A- 2002 086 075
- SU-A1- 486 731
- US-A- 5 103 767
- US-A- 5 148 607
- US-A- 6 145 476
- US-A1- 2004 244 712
- US-A1- 2006 081 192

## Description

The present invention relates to a device for treating fish in a water mass for different conditions, and comprises: a housing defining a channel with a treatment chamber for accommodating a specimen of the fish, and the housing comprises members for said treatment of the fish in the channel, the housing comprises means adjacent to the channel which can be switched between a starting position and a treatment position whereby the treatment chamber is narrowed, as is apparent from the preamble of subsequent claim 1.

The invention also relates to a method of removing lice from fish in a water mass, by means of a treatment device as said above.

### Field of the invention.

With the expression conditions, it should especially be understood that the fish have lice in the skin or has a disease desired to treat. A condition in which the device can be used, is to tag the fish with an ID chip usually attached by a dorsal fin. It can also be used to perform scanning to obtain picture recordings, thus determining the size of the fish and the outer shape, which constitutes a main part of the present invention.

Salmon lice are the most common parasite on farmed salmon, and the biggest disease problem in the industry. For several years, salmon lice have been treated with medication as well as various forms of treatment in baths. Monitoring of salmon lice shows that the problem increases and that the lice in some cases have become resistance to the preferred treatment method, i.e. the chemical with which it is treated. Calculations have shown that the cost related to salmon lice amounts to billions of NOK per year. Farmed fish may also be infected by number of other diseases which also cost the industry a lot of resources for treatment, such as for vaccination of each fish.

Wrasse is a common treatment for salmon lice. Wrasses are released into the fish cage and eat the lice off the salmon. But there are some challenges. If the fish cages are not clean, the wrasses prefer to eat organisms growing on the net and hide instead of the salmon lice. Other important issues are the extensive relocation of wrasses from farming facilities, or wild wrasses from the coast, for example, of the coast of Norway and Sweden. Genetic differences have been registered between the wrasses, so it is especially important that they do not escape from the fish cages and blends with the local wrasse.

There may also be a risk related to possible spread of infection and/or organisms in the transport water. In addition, wrasse such as lumpfish is exposed and susceptible to many diseases. Generally, use of wrasses do not give the desired effect in cold waters, which is challenging for plants in northern regions, such as along the northern coast of Norway.

### Stat of the art.

There are many solutions known to treat fish for diseases, and to remove parasites like lice from the skin of the fish / surface scales.

As regards the state of the art, reference should be made to the following patents: CN 101496503 (Biology Research Inst of Fujian), NO-331.345 (Esben Beck), NO-331.097 (CMT Lyng AS), NO-304.171 (John Petter Andorsen), NO-169.933 (Statland MEK. Verksted), NO-315.351 ( Sintef Fiskeri og Havbruk AS), NO 333499 (Salvison AS), NO 337292 (Kjell Hopen), DK-177.873 B1 (Erhard Joensen), DE-912542 (Willi Schmdt), EP-2837284 (GRUPO MARCO S P A), EP 2962556 (Ardeo Technology AS), GB 2201772 (Papirind Forskningsinst et al), WO 2004/044829 (Data flow Alaska Inc. et al), WO-94/17657 (Stephen Edward Jackman), as well as the following web link: https://www.patentstyret.no/ nn-NO/lar-av-andre/stingray/

The first mentioned Chinese patent CN 101496503 represents a close prior art in relation to the present construction for the treatment of fish.

The said patent shows a construction in which fish is passed through a passage into a treatment chamber where it is treated. In the chamber (the room) the fish are immobilized by means of inlet and outlet ports that are closed and opened successively. Inside the chamber are cushions arranged to push towards the fish to immobilize it.

Furthermore, reference is made to the said Norwegian Patent No. 331,345. This patent refers to a triangular tube body with window 3. It includes a camera 4 for scanning - image recognition of the fish that is located in the tube body. Laser unit 5 is adapted to "shoot" light pulses from light opening 7. The laser unit is held by a wagon which again comprises a movable rider so that the light pulse thrower can be set in all positions. The tube is designed to limit the fish's possibility to move so that light pulses more easily will be placed on it. Furthermore it is written that one should use some kind of guiding of the fish towards the location where light pulses can be placed on the fish, since it otherwise would be too randomly hit by the pulse treatment. The camera is connected to a control unit for identification of fish. The laser cannon can be tuned for salmon lice shooting where camera 4 have found lice. The device for treatment is placed freely in the water mass of the fish cage.

Patent NO-331097 relates to a unit of a long tube with rough surfaces, where the parts with rough surface has holes to the inner part of the tube, where water and lice is pulled in and led away via a tube 26, se the figure. There is no channel which the fish shall swim through. It should only be attracted by the curved shape that it can rub against.

WO9417657 relates to removal of lice using soundwaves where the fish is led through a tube between two fish cages. In the inner walls of the tube there are means for transmitting soundwaves who kills lice. To displace fish in such a setting is well known, for example by shrinking one of the fish cages, and by doing that forcing the fish trough the tube.

Similar solutions are described in the other referred publications.

US6145476A discloses another device for treatment of fish in a water mass, said device comprising a vessel with a set of walls defining an interior chamber into which the fish and water can be located, the walls having a restraining configuration and a non-restraining configuration.

### Object of the invention

It is an object of the invention is to bring about a new construction to effectively treat fish in a fish cage, and where the device can be used to all kinds of fish treatment: vaccination, mechanical removal of lice from fish skin /scale, or removing it by using chemicals, such as hydrogen peroxide H₂O₂.

It is further an object for the invention to bring about a device which always (24/7) can be operating submerged in the fish cage's water mass and continuously treat fish.

One object is also to bring about a tubular shaped treatment device that treats fish one by one inside the tube shape, wherein the tube shape is substantially different from the one discussed in NO-331.345.

Moreover it is an object to lure the fish to the tube shaped treatment device inlet, and then to force the fish forward to the treatment chamber in the tube. Particularly by means of plate shapes that move axially longitudinally through the device.

One object is to provide a construction for the tube shaped treatment device that immobilizes the fish at the moment for treatment. This means that it is enclosed so tight that it can not move or strike with its tail.

Finally, it is an object of the invention to provide a new embodiment of a grated flap being able to be opened and closed, and at the same time to be moved back and forth. Wherein it is arranged a front and rear flap defining the sluice where the fish is located between them.

In addition to removal of salmon lice, it is an object to scan the fish that is located in the treatment channel/tube by using instruments that can count the number of lice on each fish, as well as measuring the size, injecting, ID-chips/-marks medications, and taking samples of the fish

It is an object that the device functions somewhat analogously to a so-called "milk robot". As an example, if a fish has recently been through the system enters the tube, it is recorded as a treated fish of the scanning system, and the fish is led directly through the tube and into the water mass without treating it again. It should also work so that fish registered as injured is sorted out.

### The present invention

The device according to the invention comprises the features of independent claim 1. The that means to constrict the treatment chamber's volume is made up of curved plate bodies in connection with the channel's outer wall, and they can be pushed/pulled outwards and inwards to be switched between said starting- and treatment position, the plate bodies include:
two mutually sideways arranged plate bodies which are arranged to push towards and from each other, and they are curved, so that the inner sides of the curved plates are facing each other where the curvature of the plate bodies are shaped to fit to the curvature on the side of a fish, and lower and an upper plate bodies are each curved to fit to a normally curved shape of the longitudinal back and belly of the fish respectively, and that the inner sides the plate bodies are facing each other.

According to a preferred embodiment, for the narrowing of the treatment chamber, the two curved plates are arranged to slide towards each other while the upper and lower curved plates are kept at rest in their initial position, then pushed towards each other until the residence volume has got its final shape adapted to the fish to be treated. According to the invention, d the outlet and inlet from the channel comprise respective flaps which in a manner known per se is set across the longitudinal direction of the channel, which can be switched between an open position, where fish can pass through and a locked position, thus closing the outlet or inlet, while the outlet flap is fixed, the inlet flap can be moved axially led by guides in the housing wall, and is thus suitable for moving the fish forward through the channel.

Preferably, each flap forms a circular frame that is attached to a drive in the housing, which drive can move the movable flaps in the axial direction via guides in the housing wall.

The channel forms a final treatment chamber for the fish in a fish cage, as the last section of a channel system through the housing which comprises an extended funnel-shaped inlet section leading into a gradually tapered central chamber and a pre-chamber, and then into the narrower treatment chamber with its outlet leading out to the water mass of the fish cage.

According to yet another preferred embodiment, the treatment device is further arranged for killing parasites on the fish, for sample taking under the fish's skin or for marking fish with chip, and is attached to said plate bodies that can be moved close to the sides of the fish.

The housing comprises a plurality of scanning units for scanning the fish for mapping and storing the surface condition of the fish in a data unit, such as for mapping of lice, and the recordings of lice placement from the data unit are used to guide the treatment devices to positions on the fish's surface where lice are to be removed.

Preferably, the mouth-shaped head of the treatment device comprises a lice remover with a pout form similar to a wrasse, and is adapted to be inserted over lice located in the fish skin to remove lice by sucking it off the fish skin with the use of negative pressure.

Preferably, the treatment device may comprise a needle with a cannula that can be led through the pout form and inserted underneath the fish's skin for vaccination or sampling.

The method according to the invention for removal of lice from fish in a water mass of a fish cage comprises the features of independent claim 9.

According to a preferred embodiment, the curved plate bodies of the device are pushed out against the side walls of the channel after the fish has been treated, the front flap is switched to its open position, the rear flap is set to its closed position and is guided through the space formed by the wall parts, and forward so that the fish is pushed out of the chamber through the open flap.

According to a preferred embodiment, the fish in the water mass is led through and treated in a plurality of treatment devices submerged in the water mass of the fish cage, to achieve an effective treatment of the fish.

In particular, it is preferred that a plurality of adjacent treatment chambers are used, each receiving fish to be treated from a common upstream delivery system in the form of units.

### Description of Figures.

In the following, the invention will be explained in more detail with reference to the following figures, in which:
Figure 1 shows a side view of the device according to the invention submerged in the water mass in a fish cage, and operative treating one by one fish in a dedicated treatment chamber.
Figure 1a shows an enlarged view of the device in Figure 1, which is intended to treat fish individually.
Figure 2A shows a longitudinal sketch of the treatment chamber in the device, as well as the inlet funnel for collecting and guiding the fish towards the treatment chamber.
Figure 2B shows a longitudinal sketch of the invented structure in which the residence volume of the fish in the treatment chamber is being reduced. Front and rear grids are used to move the fish forward in the system
Figure 2C shows a longitudinal sketch wherein the rear movable flap is in several different positions for pushing the fish (to the right) out of the treatment chamber.
Figure 3A shows a cross-section of the compression device according to the invention, in the form of four sector-shaped curved plates, partially pushed out from their position in the inner wall of the pipe.
A figure 3B show the four sector-shaped curved plates pushed laterally all the way towards the axial center of the tube, and compress the residence volume of the fish which is also illustrated in the figure.
Figure 4A shows an embodiment of perforated flaps for forcing the fish forward through the pipe where the fan shaped parts are in their open position wherein the fish can pass through.
Figure 4B shows correspondingly, but where the flaps are rotated about their support and pushed together to close the opening through the grating.
Figure 4C shows details of the flap construction.
Figure 5A shows the shape of a mouthpiece of a tube which is to be directed towards a louse on the surface of the fish before a negative pressure or suction is created which causes the louse to release the grip and to be sucked into the pipe and carried away.
Figure 5B shows similarly where the tube on the inside comprises an injection needle that can be forwarded and inserted into a fish to vaccinate it or take samples.
Figure 5C shows details of the mouthpiece from figure 5A.

### Description of Preferred Embodiments of the Invention

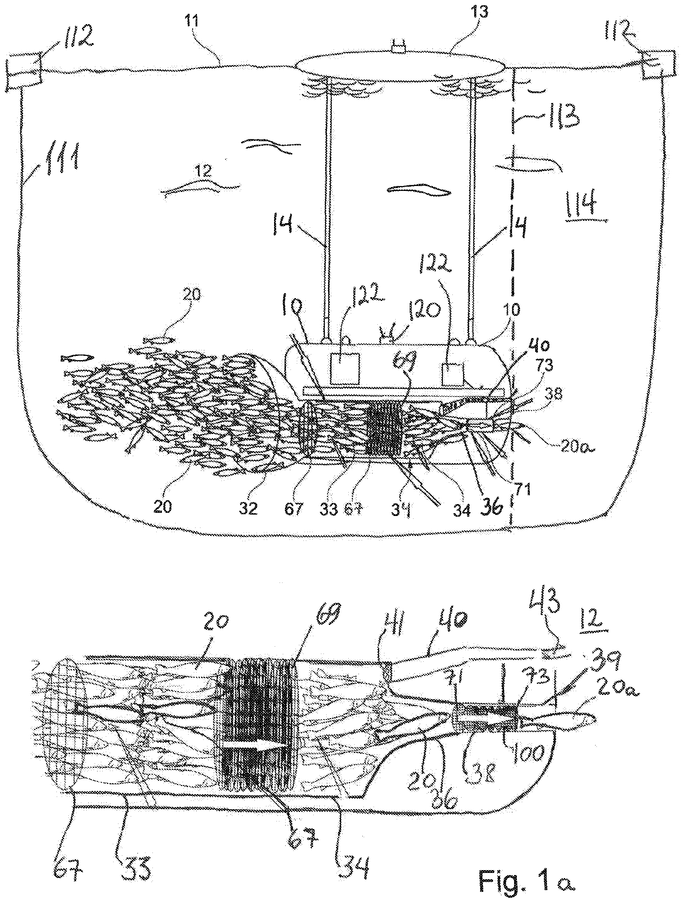

The invention will be further explained with reference to Figure 1, which shows a side view of the new device submerged in the water mass 12 in a fish cage 111 with farmed fish 20. The sea surface is shown at 11. The fish cage is closed and carried by a floating collar 112 at the sea surface 11.

The treatment pipe, which will now be explained in detail, is placed in a box-shaped housing 10 submerged inside the fish cage, and it hangs in the water mass 12 in lines 14 from a buoy 13 connected to the rest of the fish cage on the sea surface 11.

Inside the housing 10 is all instruments for carrying out the invention. This includes a drive to operate the fish delivery system (referred to later), a scanning system with computer unit for performing mapping (scanning) of the fish, such as its size and its surface for lice, and the instruments to perform treatment, such as vaccination, sampling or removal of lice from the fish etc.

Power, hydraulics (for example compressed air) and water to operate the instruments are supplied to the housing 10 from surface via cables not showed on the drawings. In the housing 10 instrument panels 122 are installed, and on top of the housing it is indicated a two-way operating signal unit 120, which can receive control signals from the operator on the surface, and return operating data. Also, the suction system for sucking away loosened lice from the fish is located inside the house 10.

According to the invention, the housing 10 is provided with a longitudinal hollow channel 38 or tube shape running from one end to the other. The channel is divided into four parts, seen from the left of the figure: a funnel-shaped inlet portion 32 which leads to an intermediate gradually tapered center chamber 33 and further to a pre-chamber 34, and then into a channel 36 (also tapered) and further to a treatment chamber 100 from which an outlet 39 leads out of the channel and into the water mass 12 of the fish cage. The channel is preferably formed as a tubular channel through the box from one inlet end to the other outlet end. The channel can of course be formed by a tube mounted in the housing.

Near by the transition from the pre-chamber 34 to the actual treatment chamber itself, an additional open channel 40 is formed which leads to the free water mass 12. The channel is connected to a device (not shown) for suction of water (creating a water flow) from the pre-chamber 34 through the channel 40 and into the water mass 12. At the inlet of this channel 40 there is provided a grating 41 (Figure 1a) which prevents fish from entering the channel 40. A suction pump 43 is used to create a flow of water to the right. The purpose is to contribute to a sufficient flow of water into the inlet 32 and to the treatment chamber 100 to thereby draw fish into the channel. A large number of fish 20 are illustrated in front of the box 10 towards the funnel and further into the front chamber 33 while only one fish 20 is in the actual treatment chamber.

Figure 1 shows that the treatment channel is in the form of a bottle, in which the bottom represents the inlet while the neck of the bottle represents the chamber where only one single fish is allowed at the time and where the treatment occurs. The different chambers represent a step-by-step narrowing of the volume to the last chamber, where there is only room for one single fish.

### Treatment chamber.

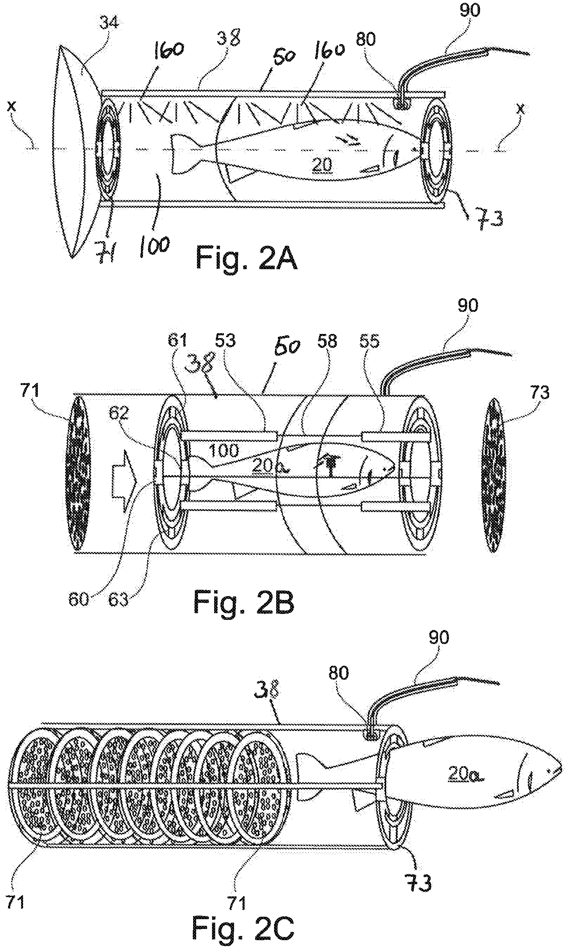

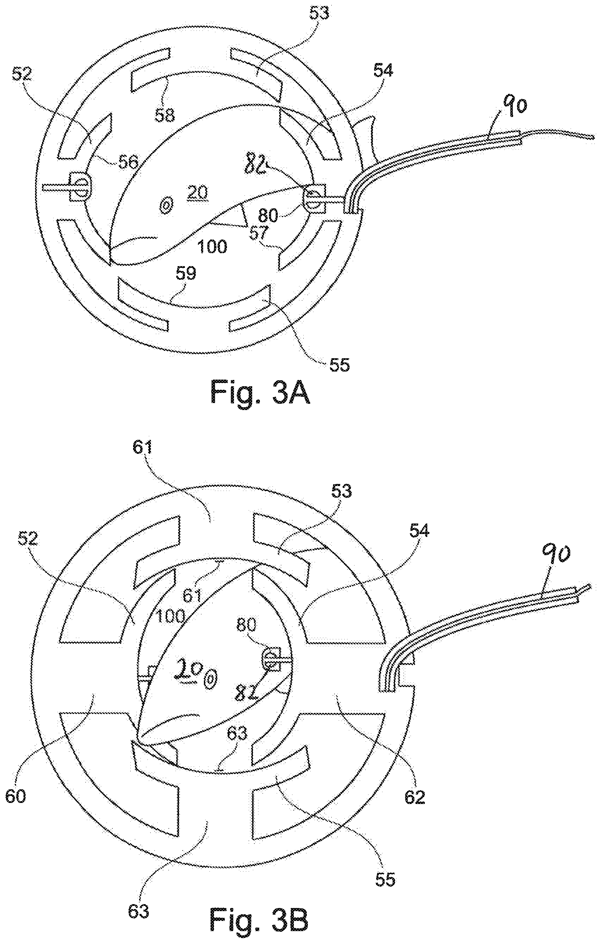

Figure 2A shows the channel 36 from a side, partly in section with a treatment chamber 100 and parts of the inlet from the pre-chamber 34 to the left in the figure. Inside the chamber, against the chamber wall, it is arranged a tubular form 50 with plate bodies which can be displaced radially inwardly and outwardly in order to regulate the size of the treatment chamber 100 wherein the fish 20 is held during treatment. Longitudinal, i.e. in the axial direction, the tube 50 is split into a number of longitudinal curved plate bodies. Figures 3A and 3B show four such sections 52,53,54,55, the number of sections may however be more or less than shown in the figures. The inner sides of these sections have a curvature corresponding to the normal curvature of the fish, i.e. a curve around the longitudinal axis X-X (Figure 2A). The inner sides of the side plates are shown with reference numbers 56 and 57, while the inner sides of the top and bottom plates are shown at 58 and 59 respectively.

The curved backside of each of the halves 52-55 is mounted to a rod (or several) whose other end is inserted into the housing 10 and is coupled to a drive in the housing so that the rods and thus the halves 52-55 can be radially pushed inwardly and outwardly from center axis X-X of the tube. Figure 3A shows the curved halves pulled back almost all the way to the tube's wall, while Figure 3B shows the halves pushed in so that the treatment chamber 100 is reduced, and adapted to the normal body shape of the fish to be treated in the treatment chamber 100. Instead of curved segments based on a tube, the segments can be straight plate shapes. They may also comprise grating-like plates which provide a corresponding narrowing effect around the fish to immobilize it in the treatment chamber 100. A preferred method for narrowing is that the two side plate bodies 52 and 54 are first pushed against each other until that they are placed between the top 53 and bottom 55 plate bodies. Then the top plate body 53 is pushed downwards and the bottom plate body 55 is pushed upward, until these cover the upper and lower slit 61 and 63 respectively between the two side plates.

In this way, the fish is immobilized in the treatment chamber 100, and it is easier to carry out treatment such as removal of one by one of the parasites / lice from the surface of the fish.

Rather than the curved plate bodies 52-55 extending over the entire length of treatment chamber 100, it may be used front and rear plate bodies 53 and 55, respectively (Figure 2B), which are interconnected via an elongated rod 58 extending in adjusted axially elongated channels in the plate bodies, so that the rear plate bodies can be pushed forward to thereby move fish located in the treatment chamber via the rear flap plate 71. This also means that the support of the rear plate portions 60, 61, 62, 63 in the housing 10 is axially longitudinally slidable in the inner housing walls so that they can be moved back and forth inside the channel. The front section of plates 55 is then stationary fastened in the channel wall, as the four plates are movable radially inwardly and outwardly as outlined before and pairwise towards each other. It is an advantage that the axial distance between the front and rear plate bodies is as low as possible in order to enable the treatment mouth piece to remove each louse in the surface.

The plate bodies are preferably fabricated in hard plastic, but they can also be made of light metal such as aluminum, or comprise curved grade or grating formed plates.

Figures 3A and 3B illustrate how the constriction of the fish's residence volume for the treatment can be done. While the upper 53 and lower 55 plate bodies is kept at rest, the two side plate bodies 52 and 54 are moved towards each other, and thereafter the upper and lower plate bodies in a similar way are moved towards each other until the treatment chamber 100 reach its final shape adapted to the fish 20 that is to be treated.

Occasionally injured fish enters the channel, fish that one wishes to remove from the fish cage. To solve this there is mounted means (not shown in the drawings) to guide the injured fish into a suction tube directed to a suitable tank on the surface for further processing onshore. It is by the use of the scanning/picture recordings that the system can establish whether the fish is too injured to be released back into the water mass. "Healthy" fish is released back into the water mass.

### Drive flaps.

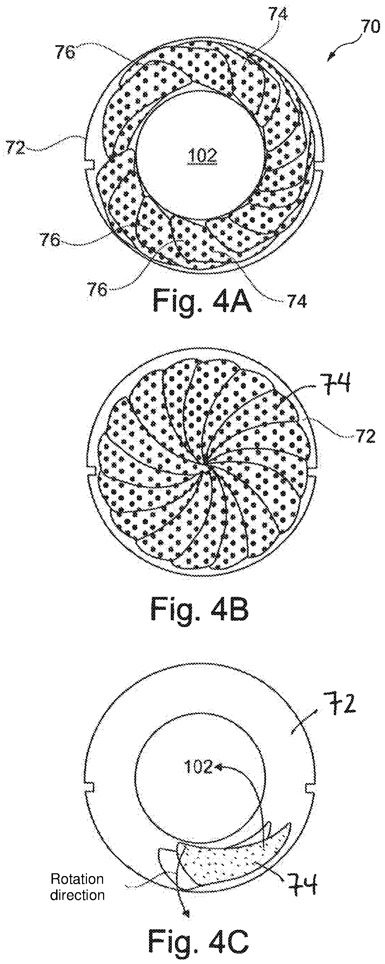

According to the invention both the intermediate chamber 33, the pre-chamber 34 and the tubular channel 36 for the treatment chamber 100 are equipped with flaps 70 that can be switched between a closed position in which fish can not pass, and an open position in which fish can pass. Each flap is set across the channels, and is mounted to a circular frame 72, and is preferably designed as perforated plates or grating where water can pass through the perforated holes when the flaps are in the closed position. The purpose of these flaps is that they by axially movement can displace the fish forward from the inlet to the treatment chamber. A preferred example of such flaps is showed in figure 4A, 4B and 4C, and they are apparent in Figure 1, 2B and 2C.

Figure 4A is showing a preferred example of such a flap construction in the form of a circular frame disc 72 where a number of triangular formed perforated plate parts 74 are attached. Together the plate parts 74 create the form of a fan as they mutually rotate around there individual support pin 76 at the rim of the disc 72 and thereby fold out and together the plate parts form the said complete flap, as showed in Figure 4B. The size of the opening for passage of fish is shown by reference number 102 in figure 4A. This is only one out of many possible ways to produce said shift between open and closed positon. The flaps cover the whole cross section of the channel, so that when the flaps are moved to the left they will displace fish forward in the channel, and at the same time allowing water to pass trough. In figure 4C it is indicated by an arrow how a single plate part is rotated to be folded towards the center of the opening 102 so that it together with the other plate parts will close the opening 102.

The rim of the said frame disc 72 is attached to the channels inner wall through a number of pins placed around the circumference and slides in grooves in the inner wall of the housing and by use of suitable drive means, the flaps 70 can be moved back and forth while being situated across the channel.

Figure 1 shows the location of the flaps 67 and 69 at the inlet of an intermediate chamber 33 and to the pre-chamber 34, the two flaps 71 and 73 (see also Figure 2B) at the inlet to respectively at the outlet from the treatment chamber 100. The figure shows a stack of flaps 67 before the pre-chamber 34, this is to show how one flap 67 moves forward to the right of the figure while the flap 69 to the right is completely fixed and can only be opened and closed for passage of fish. Figure 1 also shows how the canal is narrowed from the inlet funnel which can accommodate a large amount of fish, to the much narrower intermediate chamber and pre-chamber 33, 34 and finally the smallest treatment chamber 100 that only accommodates one fish. The stack of grating flaps in the chamber 100 is indicative that the left grating flap 71 can move continuously or partially stepwise forward (to the right) and displace the fish out of the chamber 100 through the fixed, but now open, outlet grate 73.

The stack of grating flaps 71 in Figure 2C also shows the corresponding, that is how one of the grating flaps 71 moves forward to guide treated fish out of the treatment chamber 100. The last grating flap 73 (also referred to as front flap or outlet flap of the treatment chamber) is stationary since it should close only to hold the fish in the treatment chamber 100, and then open when the fish's treatment is finished and released into the fish cage - like fish 2a. The actual movement of the grating flap 71 (also referred to as rear flap of the treatment chamber) can be accomplished by means of a drive on the outside of the chamber, for example, by an outwards protruding pin on the top and on the bottom of the grating flap 71, attached to an upper and lower chain on the outside, and which can pull the grating flap back and forth using a drive motor as the pin glides and pushes in a longitudinal groove in the outer wall of the unit.

### Mapping of fish and its surface.

In the inner walls of the movable side plate bodies 52 and 54 a number of scanners are provided for scanning and mapping the surface of the fish. This is indicated at 160 on the figures 2A and they are placed over the inner surface so that they can map the entire surface of the fish. I.e. both sides of the fish, the belly side and the back side. The image recording is carried out continuously, with the plate bodies in both positions drawn radially outwards and pushed inwards to narrow the fish's living area.

The scanner system may comprise an optical image recognition system based on the use of a plurality of cameras 160 disposed along the inner wall. The cameras captures images of the fish, and the signals are sent to a data device that analyzes the fish condition. This can be determining the species the fish, its size, biomass and one can count the number of lice on the surface of the fish and where the lice are located.

In this case, where one will mainly remove lice from the surface of the fish, the data system detects where on the fish the louse is located. Such signals are sent from the data unit to a treatment unit which is guided to the point of the fish where the louse is located and provides the treatment as explained in the following.

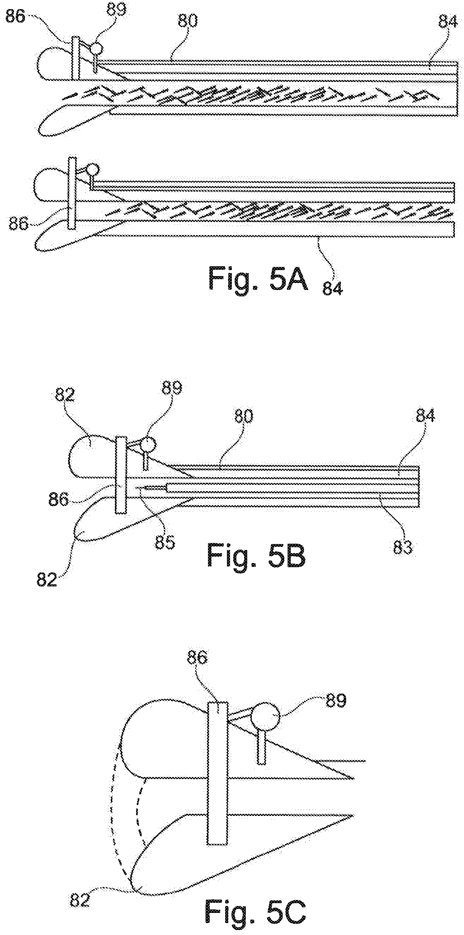

The treatment member (also referred to as mouthpiece) according to the invention is shown in Figures 2, 3 and 5 with reference number 80. It comprises a mouth-shaped head 82 mounted to the end of a tube 84 (see Figure 5) which is connected to a line with a hose to remove loosened lice from the fish in a mixture of water, and power in the form of electricity to open and close the tubular channel with a flap 86 positioned at the very end of the pipe as shown in the figure. The detail 89 shows (schematically) an electrical drive which, upon rotation, can change the flap 86 between a pulled up open position and a lowered closed position. In the tube and the hose, it is create a negative pressure suitable for lice to loosen from the fish skin, but not so strong that the skin of the fish is damaged. A negative pressure apparatus for generating such negative pressure is provided in the housing 10. A mixture of lice and water is then passed through a hose 90 for adequate processing.

The head, which is the outer part of the mouthpiece 80, is shaped like a rounded cushion 82 which forms a pout like a wrasse and is adapted to be inserted over the louse that is on the fish skin. By opening the flap 86 as shown in Figure 5A, the mouth and thus the louse are exposed to a negative pressure which causes the louse to loosen and to be sucked into the tube and removed through line 90 shown in Figures 2 and 3.

In order to perform injection or sampling of the fish, the tube may comprise an elongated holder 83 for a cannula or needle 85. When the flap opens, a sliding mechanism (not shown) will guide the needle forward, out of the cushion parts 82 and underneath the skin of the fish. Thus, samples can be taken or medicines and the like can be injected under the skin of the fish. This hose with its mouth 82 may also include other instruments for killing of lice. Such as exposing the lice for laser beams, or for instance, the needle expels a strong pressure pulse that kills the lice in the fish skin. The syringe can also be used to attach a chip to the skin or a dorsal fin so that the fish is labeled and can be recognized in the system at a later pass through the treatment channel.

### Position control of treatment mouthpiece.

The mouth-shaped treatment head 82 with the tube 84 is preferably mounted to a carrier (similar to a trolley on rails) which is movably mounted to an arcuated hoop which again is secured in a seat that can be moved axially back and forth in a groove on the inside of the two side plate bodies 52 and 54, powered by appropriate electricity. The carriage comprises an electrically driven motor that can move it up and along the arcuated hoop. This motor as well as the axial movement of the seat is controlled from the data unit mentioned above.

The carrier also includes a drive for moving the tube's treatment head 82 straight forward towards the surface of the fish 20. The system for supplying drive means to the head 82 and removal of lice/water mixture is provided through a line 90 (Figures 3A, 3B) which has a suitable length for the head to be moved within the needed range for treatment of the fish. In this way, the treatment head 82 is subsequently moved, controlled from the data unit, to each of the points where there is a louse in the fish skin. Or to the appropriate point on the fish from which samples should be taken, where to vaccinate, or where an ID chip shall be attached.

This device is intended to treat fish by always being in operation in the fish cage. In order to lure the fish to the inlet tract 32, one may in this area create a counter flow, use artificial light or add fish feed. In case of counter flow to attract the fish, it can be done by pumping water through the side tube 40 described previously (in connection with Figure 1).

### One relevant application of the device for stepwise treatment of fish.

By creating allurements (light - feed - counter current) as mentioned in front of the inlet, a larger number of fish will accumulate at the inlet as Figure 1 shows.

The left flap 67 toward the center chamber 33 is in the open position, and a portion of the fish 20 is displaced into the center chamber 33. The flap 67 can then be closed and is moved axially to the right of the figure. In this position the next flap 69 is open until fish is filled in the pre-chamber 34, and then it closes. There is a tapering towards the treatment chamber so that only one fish at the time can reach the treatment chamber 100. Once one fish gets past the first flap 71 towards treatment chamber 100, both this and the outlet flap 73 closes so that the fish becomes trapped in the treatment chamber 100. To prevent the fish from moving too much, the curved plate bodies are moved towards each other so that the fish is standing almost completely immobilized.

Then the scanning of the fish is carried out, upon which it is treated by the treatment mouthpiece as outlined above.

When the treatment is completed, the plate bodies 52-54 and 53-55 respectively moves apart again, the outlet grating flap 73 opens. The rear flap 71 is guided forward into the treatment chamber 100 partially enclosed by the sidewall portions 53 and causes the fish 20a to escape into the water mass.

The rear flap 67 is then returned (to the left), it opens and a new fish is released into chamber 33 and further to the treatment chamber 100 for treatment, where the above steps are repeated.

As mentioned, the scan will determine whether the fish in question has so recently been in the chamber that it is not interesting to treat it again. Then it will only pass through the chamber and further into the water mass.

Depending on the amount of fish in a fish cage, several treatment devices according to the invention can be arranged in the water mass of the fish cage, to achieve a more efficient treatment of the fish than just by using a single unit.

In a fish cage where there can be up to 200,000 fish, it is natural to use several treatment chambers according to the invention, to scan and possibly treat all fish swimming in the fish cage. A device 10 as shown in Figure 1, which is submerged in the fish cage, can comprise a number of treatment chambers 100 to clean all fish in

the closed fish cage. These can be organized as a stack within a single housing 10, in which all chambers 38 receive one and one fish from the upstream funnel system 32, 33, 34, 36 which collects a given amount of fish for stepwise singularisation into one for each chamber 38, each chamber 38 having the same configuration as shown in the figures. Alternatively, a plurality of complete treatment devices adjacent to each other may be provided within the fish cage 111.

Preliminary tests and calculations show that a single treatment chamber 100 with associated equipment, can handle up to 4000 fish per 24 h.

The fish can be released directly back to the fish cage 111 after treatment, i.e. to the right in Figure 1 as illustrated. It may be preferable that the outlet from the chamber 100 enters a second closed volume 114 which is separated from the rest (e.g., an adjacent second fish cage), to avoid that "cleaned" fish is released back into the same infected water volume and then be infected again with lice shortly after. In figure this is, as an example, indicated by the dotted vertical line 113 which is a tight fabric which separates the fish cage into two separate water masses 12 and 114. Fish released from the apparatus of the invention to the right are introduced into the fish cage portion 114 with water which is not infected with lice.

## Claims

1. Device for treatment of fish in a water mass for different conditions, comprising: a housing (10) defining a channel (38) with a treatment chamber (100) suitable to accommodate one specimen of the fish, and the housing (10) comprises treatment members (80) for treatment of the fish in the treatment chamber, wherein the housing (10) comprises means (52-55) adjacent the channel (38) and which is adapted to be switched between a starting position and a treatment position where the residence volume of the treatment chamber (100) is reduced, **characterized in that** the channel (38) is tubular and comprises:
- an inlet (32) connected to an intermediate chamber (33) and pre-chamber (34) connected to a narrowing channel (36) connected to the treatment chamber (100) connected to an outlet (39), where the inlet (32) and pre-chamber (34) is configured to be able to contain a plurality of fish, while the treatment chamber (100) is configured to be able to contain a single fish at a time,
- flaps (67, 69, 70, 71, 73) set across the longitudinal direction of the channel 38, that is adapted to be switched between an open position where fish can pass through and a closed position, where flaps (67, 70) arranged in the intermediate chamber (33), the pre-chamber (34) and in the treatment chamber (100) are adapted to be moved axially to move fish forward when in a closed position, and
the means for reducing the residence volume of the treatment chamber (100) comprises curved plate bodies in connection with the outer wall of the channel (38), and which are adapted to be pulled/pushed outwards and inwards to be switched between said starting position and treatment position, which plate bodies comprises:
- two mutually sideway arranged plate bodies (52,54) which are adapted to be pushed towards and from each other, and the bodies are curved so that their inner side is facing each other and wherein the curvature is adapted to a normally curved shape of fish in longitudinal direction,
- upper and lower plate bodies (53,55) curved correspondingly to the longitudinal backside, and respectively belly side of the fish, and with the inner side of the bodies facing each other, wherein
- the device further comprises a plurality of scanners for scanning and mapping the surface of fish in the treatment chamber, and
- each treatment member (80) comprises a mouth-shaped head (82) mounted to the end of a tube (84) which is connected via a drain line (90) to a source of negative pressure, for the removal of parasites on the fish, and
- a data unit configured to store the surface condition of the fish and to control the treatment members.

2. Device according to claim 1, **characterized in that** each flap forms a circular frame attached to a drive in the housing, which drive is adapted to displace the movable flaps F (70) in the axial direction via guides in the housing wall.

3. Device according to claim 1, **characterized in that** the flaps are perforated plates or grating where water is adapted to pass through the perforated holes when the flaps are in the closed position.

4. Device according to claim 1, **characterized in that** the treatment channel (38) is in the form of a bottle, in which the bottom represents said inlet (32) while the neck of the bottle represents the treatment chamber (100) where only one single fish is allowed at the time.

5. Device according to any one of the preceding claims, **characterized in that** each scanner is a camera (160) disposed along the inner walls of the treatment chamber, preferably on the curved side plate bodies (52,54) of the treatment chamber (100).

6. Device according to any one of the preceding claims, **characterized in that** the treatment members (80) are each mounted to a carrier which is movably mounted to an arcuated hoop which again is secured in a seat that is adapted to be moved axially back and forth in a groove on the inside each of the two side plate bodies (52 and 54), and being powered by appropriate electricity.

7. Device according to claim 1, **characterized in that** the treatment members are further arranged for the killing of parasites on the fish, for sampling under the skin of the fish or for chip marking, and are associated with said plate bodies via respective holders that can be moved tightly to the side surfaces of the fish.

8. Device according to claim 7, **characterized in that** the mouth-shaped head (82) of the treatment members (80) comprises a louse remover with a pout form corresponding to wrasse, and is adapted to be inserted over the louse in the fish skin to remove the louse by sucking it from the fish skin with use of negative pressure.

9. Method for removal of lice from fish in a water mass of a fish cage, by means of a treatment device (10) according to any one of claims 1-8, **characterized by**
setting a front flap (73) at the outlet of the treatment chamber (100) in its closed position, guiding fish in the fish cage through a rear flap (71) at the inlet of the treatment chamber (100) in its open position, towards the channel (38) where the curved plate bodies (52-53-54-55) are pushed/pulled towards the outer wall of the channel,
setting the rear flap (71) to closed position,
pushing/pulling the curved plate bodies (52, 53, 54, 55) forward to a position where they are in a suitable distance from the belly, backside and side parts of the fish, thus immobilizing the fish,
scanning the fish and recording a picture of the fish and its surface in the data unit, with regard to the position of lice in the fish skin,
controlling the treatment member (80) by the data unit and directing it to said positions with louse to remove them,
placing the mouth shaped head (82) of the treatment member over and around the louse, and generating a negative pressure which pulls the louse of the fish, the louse is removed in a water flow through the drain line (90) for adequate treatment.

10. Method according to claim 9, **characterized by** the following steps:
- pushing the two curved side plate bodies (52, 54) against each other while the upper and lower curved plate bodies (53, 55) are kept at rest in the starting position, and
- pushing the upper and lower curved plate bodies (53, 55) against each other until the residence volume has reached its final form adapted to the fish (20) that is to be treated.

11. Method according to claim 9 or 10, **characterized by** the following steps after the fish is treated:
pulling the curved plate bodies (52-53-54-55) out towards the channel outer wall,
adjusting the front flap (73) to its open position,
guiding the rear flap (71) in its closed position through the room made up of the curved plate bodies (52-53-54-55), and forward so that the fish is pushed out of the chamber through the open front flap (73).

12. Method according to any one of claims 9 - 11, **characterized in that** the fish in the water mass is led through a plurality of treatment devices in the water mass of the fish cage, so that one can achieve an effective treatment of fish.

13. Method according to any one of claims 9-12, **characterized by** using a number of mutually adjacent treatment chambers (100) which each receives a single fish that is to be treated, from a common upstream delivery system in the form of units.

## Patentansprüche

1. Vorrichtung zur Behandlung von Fischen in einer Wassermasse für unterschiedliche Bedingungen, umfassend: ein Gehäuse (10), das einen Kanal (38) mit einer Behandlungskammer (100) definiert, die geeignet ist, ein Exemplar der Fische aufzunehmen, und das Gehäuse (10) umfasst Behandlungselemente (80) zur Behandlung des Fisches in der Behandlungskammer, wobei das Gehäuse (10) benachbart zu dem Kanal (38) Mittel (52-55) umfasst, und die eingerichtet sind, zwischen einer Ausgangsposition und einer Behandlungsposition, in der das Verweilvolumen der Behandlungskammer (100) reduziert ist, umgeschaltet zu werden, **dadurch gekennzeichnet, dass** der Kanal (38) rohrförmig ist und umfasst:
- einen Einlass (32), der mit einer Zwischenkammer (33) verbunden ist, und eine Vorkammer (34), die mit einem Verengungskanal (36) verbunden ist, der mit der Behandlungskammer (100) verbunden ist, die mit einem Auslass (39) verbunden ist, wobei der Einlass (32) und die Vorkammer (34) so konfiguriert sind, dass sie eine Mehrzahl von Fischen aufnehmen können, während die Behandlungskammer (100) so konfiguriert ist, dass sie jeweils einen einzigen Fisch aufnehmen kann,
- Klappen (67, 69, 70, 71, 73), die quer zur Längsrichtung des Kanals (38) eingestellt sind, der eingerichtet ist, zwischen einer offenen Position, in der Fische passieren können, und einer geschlossenen Position umgeschaltet zu werden, wobei Klappen (67, 70), die in der Zwischenkammer (33), der Vorkammer (34) und in der Behandlungskammer (100) angeordnet sind, eingerichtet sind, axial bewegt zu werden, um Fische in einer geschlossenen Position vorwärts zu bewegen, und
das Mittel zum Reduzieren des Verweilvolumens der Behandlungskammer (100) gekrümmte Plattenkörper in Verbindung mit der Außenwand des Kanals (38) umfasst, und die eingerichtet sind, um nach außen und nach innen gezogen/geschoben zu werden, um zwischen der Ausgangsposition und der Behandlungsposition umgeschaltet zu werden, wobei die Plattenkörper umfassen:
- zwei seitlich zueinander angeordnete Plattenkörper (52, 54), die eingerichtet sind, aufeinander zu und voneinander weg geschoben zu werden, und die Körper sind so gekrümmt, dass ihre Innenseiten einander zugewandt sind, und wobei die Krümmung an eine normal gekrümmte Form von Fischen in Längsrichtung angepasst ist,
- obere und untere Plattenkörper (53, 55), die entsprechend der längsgerichteten Rückenseite bzw. der Bauchseite des Fisches gekrümmt sind, und wobei die Innenseite der Körper einander zugewandt sind, wobei
- die Vorrichtung ferner eine Mehrzahl von Scannern zum Abtasten und Abbilden der Oberfläche von Fischen in der Behandlungskammer umfasst, und
- jedes Behandlungselement (80) einen mundförmigen Kopf (82) umfasst, der am Ende eines Rohrs (84) montiert ist, das über eine Abflussleitung (90) mit einer Unterdruckquelle zur Entfernung von Parasiten auf dem Fisch verbunden ist, und
- eine Dateneinheit, die so konfiguriert ist, dass sie den Oberflächenzustand des Fisches speichert und die Behandlungselemente steuert.

2. Vorrichtung nach Anspruch 1, **dadurch gekennzeichnet, dass** jede Klappe einen kreisförmigen Rahmen bildet, der an einem Antrieb im Gehäuse angebracht ist, welcher Antrieb eingerichtet ist, die beweglichen Klappen (70) über Führungen in der Gehäusewand in axialer Richtung zu verschieben.

3. Vorrichtung nach Anspruch 1, **dadurch gekennzeichnet, dass** die Klappen als Lochplatten oder Gitter ausgebildet sind, an denen Wasser durch die Löcher hindurchtreten kann, wenn sich die Klappen in der geschlossenen Stellung befinden.

4. Vorrichtung nach Anspruch 1, **dadurch gekennzeichnet, dass** der Behandlungskanal (38) die Form einer Flasche hat, deren Boden den Einlass (32) darstellt, während der Hals der Flasche die Behandlungskammer (100) darstellt, in der jeweils nur ein einziger Fisch zugelassen ist.

5. Vorrichtung nach einem der vorhergehenden Ansprüche, **dadurch gekennzeichnet, dass** jeder Scanner eine Kamera (160) ist, die entlang der Innenwände der Behandlungskammer angeordnet ist, bevorzugt auf den gekrümmten Seite der Plattenkörper (52, 54) der Behandlungskammer (100).

6. Vorrichtung nach einem der vorhergehenden Ansprüche, **dadurch gekennzeichnet, dass** die Behandlungselemente (80) jeweils an einem Träger angebracht sind, der beweglich an einem gebogenen Bügel montiert ist, der wiederum in einem Sitz befestigt ist, der eingerichtet ist, in einer Nut an der Innenseite jedes der beiden Seitenplattenkörper (52 und 54) axial hin- und herbewegt zu werden kann, und der durch geeignete Elektrizität angetrieben wird.

7. Vorrichtung nach Anspruch 1, **dadurch gekennzeichnet, dass** die Behandlungselemente ferner zur Abtötung von Parasiten auf dem Fisch, zur Probenahme unter der Haut des Fisches oder zur Chip-Markierung angeordnet sind und mit den Plattenkörpern über entsprechende Halterungen verbunden sind, die dicht an die Seitenflächen des Fisches bewegt werden können.

8. Vorrichtung nach Anspruch 7, **dadurch gekennzeichnet, dass** der mundförmige Kopf (82) der Behandlungselemente (80) einen Läuseentferner mit einer einem Lippfisch entsprechenden Maulform umfasst und eingerichtet ist, über die Laus in der Fischhaut eingeführt werden kann, um die Laus durch Absaugen von der Fischhaut unter Verwendung von Unterdruck zu entfernen.

9. Verfahren zum Entfernen von Läusen von Fischen in einer Wassermasse eines Fischkäfigs mittels einer Behandlungsvorrichtung (10) nach einem der Ansprüche 1 bis 8, **gekennzeichnet durch**
Einstellen einer vorderen Klappe (73) am Ausgang der Behandlungskammer (100) in ihre geschlossene Position,
Führen eines Fisches in dem Fischkäfig **durch** eine hintere Klappe (71) am Einlass der Behandlungskammer (100) in ihrer offenen Position in Richtung des Kanals (38), wo die gekrümmten Plattenkörper (52, 53, 54, 55) in Richtung der Außenwand des Kanals geschoben/gezogen werden,
Einstellen der hinteren Klappe (71) in die geschlossene Position,
Schieben/Ziehen der gekrümmten Plattenkörper (52, 53, 54, 55) nach vorne in eine Position, in der sie sich in einem geeigneten Abstand vom Bauch, der Rückenseite und den Seitenteilen des Fisches befinden, wodurch der Fisch stillgelegt wird,
Abtasten des Fisches und Aufzeichnen eines Bildes des Fisches und seiner Oberfläche in der Dateneinheit im Hinblick auf die Position der Läuse in der Fischhaut,
Steuern des Behandlungselements (80) **durch** die Dateneinheit und leiten desselben zu den Positionen mit den Läusen, um sie zu entfernen,
Platzieren des mundförmigen Kopfes (82) des Behandlungselements über und um die Laus und Erzeugen eines Unterdrucks, der die Laus vom Fisch abzieht, wobei die Laus in einem Wasserstrom **durch** die Abflussleitung (90) für eine angemessene Behandlung entfernt wird.

10. Verfahren nach Anspruch 9, **gekennzeichnet durch** die folgenden Schritte:
- Schieben der beiden gekrümmten Seitenplattenkörper (52, 54) gegeneinander, während der obere und der untere gekrümmte Plattenkörper (53, 55) in der Ausgangsposition in Ruhe gehalten werden, und
- Schieben des oberen und des unteren gekrümmten Plattenkörpers (53, 55) gegeneinander, bis das Verweilvolumen seine endgültige, an den zu behandelnden Fisch (20) angepasste Form erreicht hat.

11. Verfahren nach Anspruch 9 oder 10, **gekennzeichnet durch** die folgenden Schritte, nachdem der Fisch behandelt wurde:
Herausziehen der gebogenen Plattenkörper (52, 53, 54, 55) in Richtung der Kanalaußenwand,
Einstellen der vorderen Klappe (73) in ihre offene Position,
Führen der hinteren Klappe (71) in ihrer geschlossenen Position **durch** den von den gekrümmten Plattenkörpern (52, 53, 54, 55) gebildeten Raum und nach vorne, so dass der Fisch **durch** die offene vordere Klappe (73) aus der Kammer geschoben wird.

12. Verfahren nach einem der Ansprüche 9 bis 11, **dadurch gekennzeichnet, dass** der Fisch in der Wassermasse durch eine Mehrzahl von Behandlungsvorrichtungen in der Wassermasse des Fischkäfigs geführt wird, so dass eine effektive Behandlung von Fischen erreichen werden kann.

13. Verfahren nach einem der Ansprüche 9 bis 12, **gekennzeichnet durch** Verwenden einer Anzahl von zueinander benachbarten Behandlungskammern (100), die jeweils einen einzelnen zu behandelnden Fisch von einem gemeinsamen, stromaufwärts gelegenen Zuführungssystem in Form von Einheiten aufnehmen.

## Revendications

1. Dispositif de traitement de poissons dans une masse d'eau pour diverses conditions, comprenant : un boîtier (10) définissant un canal (38) avec une chambre de traitement (100) adaptée à recevoir un échantillon du poisson, et le boîtier (10) comprend des éléments de traitement (80) pour le traitement des poissons dans la chambre de traitement, dans lequel le boîtier (10) comprend des moyens (52-55) adjacents au canal (38) et qui sont adaptés à être commutés entre une position de départ et une position de traitement où le volume de résidence de la chambre de traitement (100) est réduit, **caractérisé en ce que** le canal (38) est tubulaire et comprend :
- une entrée (32) connectée à une chambre intermédiaire (33) et une pré-chambre (34) connectée à un canal de rétrécissement (36) connecté à la chambre de traitement (100) connectée à une sortie (39), où l'entrée (32) et la pré-chambre (34) sont configurées pour pouvoir contenir une pluralité de poissons, tandis que la chambre de traitement (100) est configurée pour pouvoir contenir un seul poisson à la fois,
- des volets (67, 69, 70, 71, 73) disposés transversalement à la direction longitudinale du canal 38, qui sont adaptés à être commutés entre une position ouverte où les poissons peuvent passer et une position fermée, où les volets (67, 70) agencés dans la chambre intermédiaire (33), la préchambre (34) et dans la chambre de traitement (100) sont adaptés à être déplacés axialement pour déplacer les poissons vers l'avant lorsqu'ils sont en position fermée, et
les moyens pour réduire le volume de résidence de la chambre de traitement (100) comprend des corps de plaque incurvés en connexion avec la paroi extérieure du canal (38), et qui sont adaptés à être tirés/poussés vers l'extérieur et vers l'intérieur pour être commutés entre ladite position de départ et ladite position de traitement, corps de plaque qui comprennent :
- deux corps de plaque (52, 54) agencés mutuellement de façon latérale qui sont adaptés à être poussés l'un vers l'autre et l'un de l'autre, et les corps sont incurvés de façon à ce que leur côté intérieur soit orienté l'un vers l'autre et dans lequel la courbure est adaptée à une forme normalement incurvée de poisson dans la direction longitudinale,
- des corps de plaque supérieur et inférieur (53, 55) incurvés en correspondance avec le côté arrière longitudinal, et respectivement le côté du ventre des poissons, et avec le côté intérieur des corps orientés l'un vers l'autre, dans lequel
- le dispositif comprend en outre une pluralité de scanners pour scanner et mapper la surface des poissons dans la chambre de traitement, et
- chaque élément de traitement (80) comprend une tête en forme d'orifice (82) montée à l'extrémité d'un tube (84) qui est connecté par une conduite de drainage (90) à une source de pression négative, pour l'élimination des parasites sur le poisson, et
- une unité de données configurée pour stocker la condition de surface du poisson et pour contrôler les éléments de traitement.

2. Dispositif selon la revendication 1, **caractérisé en ce que** chaque volet forme un cadre circulaire fixé à un entraînement dans le boîtier, entraînement qui est adapté à déplacer les volets mobiles (70) dans la direction axiale par des guides dans la paroi de boîtier.

3. Dispositif selon la revendication 1, **caractérisé en ce que** les volets sont des plaques perforées ou une grille où l'eau est adaptée à passer à travers les trous perforés lorsque les volets sont en position fermée.

4. Dispositif selon la revendication 1, **caractérisé en ce que** le canal de traitement (38) se présente sous la forme d'une bouteille, dans laquelle le fond représente ladite entrée (32) tandis que le col de la bouteille représente la chambre de traitement (100) où un seul poisson à la fois est autorisé.

5. Dispositif selon l'une quelconque des revendications précédentes, **caractérisé en ce que** chaque scanner est une caméra (160) disposée le long des parois intérieures de la chambre de traitement, de préférence sur les corps de plaque latérale incurvés (52, 54) de la chambre de traitement (100).

6. Dispositif selon l'une quelconque des revendications précédentes, **caractérisé en ce que** les éléments de traitement (80) sont chacun montés sur un support qui est monté de manière mobile sur un arceau arqué qui est à son tour fixé dans un siège qui est adapté à être déplacé axialement d'un côté à l'autre dans une rainure à l'intérieur de chacun des deux corps de plaque latérale (52 et 54), et étant alimentés par de l'électricité appropriée.

7. Dispositif selon la revendication 1, **caractérisé en ce que** les éléments de traitement sont en outre agencés pour la destruction des parasites sur les poissons, pour l'échantillonnage sous la peau des poissons ou pour le marquage par puce, et sont associés auxdits corps de plaque par des douilles respectives qui peuvent être déplacées étroitement vers les surfaces latérales des poissons.

8. Dispositif selon la revendication 7, **caractérisé en ce que** la tête en forme d'orifice (82) des éléments de traitement (80) comprend un éliminateur de pou ayant la forme d'une loquette correspondant au labre, et est adapté à être inséré sur le pou dans la peau de poisson pour éliminer le pou en le suçant de la peau de poisson à l'aide d'une pression négative.

9. Procédé pour éliminer les poux des poissons dans une masse d'eau d'une cage à poissons, au moyen d'un dispositif de traitement (10) selon l'une quelconque des revendications 1 à 8, **caractérisé par** les étapes consistant à
mettre un volet avant (73) à la sortie de la chambre de traitement (100) dans sa position fermée,
guider les poissons dans la cage à poissons à travers un volet arrière (71) à l'entrée de la chambre de traitement (100) dans sa position ouverte, vers le canal (38) où les corps de plaque incurvés (52-53-54-55) sont poussés/tirés vers la paroi extérieure du canal,
mettre le volet arrière (71) en position fermée,
pousser/tirer les corps de plaque incurvés (52, 53, 54, 55) vers l'avant jusqu'à une position où ils sont à une distance appropriée du ventre, du côté arrière et des parties latérales du poisson, immobilisant ainsi le poisson,
scanner le poisson et enregistrer une image du poisson et de sa surface dans l'unité de données, en ce qui concerne la position des poux dans la peau de poisson,
contrôler l'élément de traitement (80) par l'unité de données et le diriger vers lesdites positions avec le pou pour l'enlever,
placer la tête en forme d'orifice (82) de l'élément de traitement sur et autour du pou, et générer une pression négative qui tire le pou du poisson, le pou est éliminé dans un écoulement d'eau à travers la conduite de drainage (90) pour un traitement adéquat.

10. Procédé selon la revendication 9, **caractérisé par** les étapes suivantes consistant à :
- pousser les deux corps de plaque latérale incurvés (52, 54) l'un contre l'autre tandis que les corps de plaque incurvés supérieur et inférieur (53, 55) sont maintenus au repos dans la position de départ, et
- pousser les corps de plaque incurvés supérieur et inférieur (53, 55) l'un contre l'autre jusqu'à ce que le volume de résidence ait atteint sa forme finale adaptée au poisson (20) devant être traité.

11. Procédé selon la revendication 9 ou 10, **caractérisé par** les étapes suivantes après le traitement du poisson consistant à
tirer les corps de plaque incurvés (52-53-54-55) vers la paroi extérieure du canal,
régler le volet avant (73) à sa position ouverte,
guider le volet arrière (71) dans sa position fermée à travers la pièce constituée des corps de plaque incurvés (52-53-54-55), et vers l'avant de sorte que le poisson soit poussé hors de la chambre à travers le volet avant ouvert (73).

12. Procédé selon l'une quelconque des revendications 9 à 11, **caractérisé en ce que** le poisson dans la masse d'eau est conduit à travers une pluralité de dispositifs de traitement dans la masse d'eau de la cage à poissons, de sorte que l'on puisse réaliser un traitement efficace du poisson.

13. Procédé selon l'une quelconque des revendications 9 à 12, **caractérisé par** l'utilisation d'un certain nombre de chambres de traitement (100) mutuellement adjacentes qui reçoivent chacune un seul poisson qui doit être traité, à partir d'un système de distribution commun en amont sous la forme d'unités.
